# EUROPÄISCHE PATENTSCHRIFT

(11) **EP 0 638 221 B1**
(45) Veröffentlichungstag und Bekanntmachung des Hinweises auf die Patenterteilung: **25.09.1996**
(21) Anmeldenummer: 93907805.1
(22) Anmeldetag: 19.04.1993
(51) Int. Cl.: H04Q 11/04, H04M 11/06

(54) **Verfahren zur Herstellung von Datenverbindungen in einer Kommunikationsnebenstellenanlage**
Method for establishing data links in an auxiliary-exchange communications installation
Méthode d'établissement de liaisons de données dans une installation de postes secondaires de communication

(30) Priorität: 30.04.1992 DE 9205844 U
(43) Veröffentlichungstag der Anmeldung: 15.02.1995
(73) Patentinhaber: SIEMENS AKTIENGESELLSCHAFT, 80333 München (DE)
(72) Erfinder: LYBEER, Roger, B-9070 Destelbergen (BE); SCHALLIER, Walter, B-9031 Gent (BE)
(86) Internationale Anmeldenummer: DE9300341
(87) Internationale Veröffentlichungsnummer: WO9322884

(56) Entgegenhaltungen:
- EP-A- 0 500 450
- DE-A- 3 827 493
- DE-A- 4 120 045
- NTZ NACHRICHTENTECHNISCHE ZEITSCHRIFT Bd. 41, Nr. 3, 1988, BERLIN DE Seiten 144 - 148; P.Kröger
- TELENORMA NACHRICHTEN Nr. 91, 1987, FRANKFURT DE Seiten 41-47; R.QUINTENZ ET AL.

## Beschreibung

Die Erfindung betrifft ein Verfahren zur Herstellung von Datenverbindungen in einer Kommunikationsnebenstellenanlage nach dem Oberbegriff des Anspruchs 1.

Aus einer Sonderausgabe von "Special Issue of telcom report and Siemens Magazine COM - ISDN 1985", Seiten 13 - 24, 48 - 72, (Bestell-Nr. A 19100-L523-V849-X7600; ISBN 3-8009-3849-9) und aus der deutschen Offenlegungsschrift DE 38 27 493 A 1 ist ein Kommunikationssystem bekannt, an das analoge und digitale Telefone, Fernkopierer, multifunktionale Terminals, Arbeitsplatzsysteme, Personal Computer, Teletex- und Bildschirmtextstationen und Datenendgeräte anschließbar sind.

Wesentlicher Bestandteil dieses Kommunikationssystems ist ein zentraler Kommunikationsrechner mit einer Systemdatenbasis und zumindest einem Multitasking-Betriebssystem. Unter einer "Task"-Einheit ist dabei eine selbständige unabhängige Ablaufeinheit zu verstehen, die aus einem ablauffähigen Programm sowie seiner jeweiligen Ablaufumgebung, z.B. Speicherbelegung, Gerätezuteilung, besteht. Jede Task-Einheit befindet sich zu jedem Zeitpunkt in einem der Zustände "Aktiv", "Warten" oder "Ruhe"; Task-Einheiten können vermittels eines Multitasking-Betriebssystems parallel zueinander ablaufen, wobei dies in der Praxis sowohl mittels mehrerer unabhängig voneinander arbeitender Prozessoren als auch mittels eines einzigen Prozessors in einem Zeitmultiplexverfahren erfolgen kann. Weitere wesentliche Eigenschaften von Task-Einheiten sind, daß sie über Meldungen miteinander kommunizieren und sich gegenseitig syschronisieren können.

Die eigentliche Schaltungstechnik des bekannten digitalen Kommunikationssystems ist modular derart aufgebaut, daß die gesamte Systemstruktur auf Funktionsmodulen basiert; interne Systemschnittstellen sichern dabei die Verbindung zwischen den Modulen.

Ein derartiges Kommunikationssystem kann unterschiedlich strukturierte Endgeräte aufweisen: so sind über analoge Teilnehmeranschlußschaltungen erste Teilnehmerstellen anschließbar, die einerseits ein Fernsprechendgerät und andererseits ein Datenendgerät und ein vorgeschaltetes analoges Modem sowie eine Umschalteeinrichtung aufweisen, mit der entweder das Fernsprechendgerät oder das Datenendgerät an die analoge Teilnehmeranschlußschaltung ankoppelbar ist. Ferner sind an das Kommunikationssystem zweite Teilnehmerstellen mit einem Fernsprechendgerät und einem Datenendgerät anschließbar, dem eine Datenfernschalteinrichtung vorgeschaltet ist. Dem Fernsprechendgerät und der Datenfernschalteinrichtung ist jeweils eine gesonderte Teilnehmeranschlußschaltung zugeordnet. Schließlich sind an das Kommunikationssystem dritte Teilnehmerstellen anschließbar, die aus einem Datenendgerät und einer vorgeschalteten Datenfernschalteinrichtung bestehen. Dieses Kommunikationssystem ermöglicht durch Einkoppelung von Modems Datenverbindungen zwischen zwei ersten , zwei zweiten, zwei dritten Teilnehmerstellen, zwischen einer zweiten und dritten Teilnehmerstelle sowie Datenverbindungen zwischen einer internen ersten, zweiten oder dritten Teilnehmerstelle und einer externen gleichstrukturierten Teilnehmerstelle.

Die der Erfindung zugrundeliegende Aufgabe besteht darin, eine Kommunikationsnebenstellenanlage der eingangs genannten Art erweiterten Nutzungsmöglichkeiten zuzuführen.

Die Lösung dieser Aufgabe erfolgt gemäß der Erfindung nach den Merkmalen des Anspruchs 1.

Als erfindungswesentlich ist das Zusammenwirken anlageintern gebildeter ISDN-protokollkonformer Diensteindikatorinformationen mit der Belegung eines zentralen Modems und eines Amtssatzes anzusehen.

Die Erfindung wird im folgenden anhand eines anhand der Figuren dargestellten Ausführungsbeispiels beschrieben. Dabei zeigen:
- Fig. 1: eine Kommunikationsnebenstellenanlage gemäß der Erfindung,
- Fig. 2: ein Ablaufdiagramm mit den Verfahrensschritten zum Belegen von zentralen Modems und von Amtssätzen, und
- Fig. 3: eine im Zusammenhang mit der Belegung zentraler Modems verwendete Tabelle.

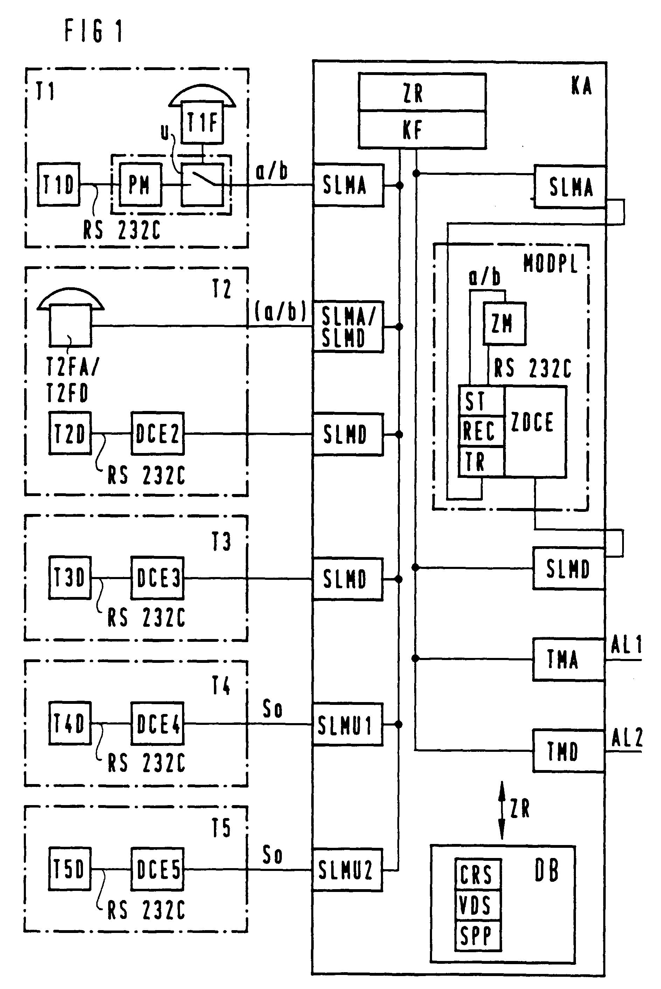

Die in Figur 1 dargstellte Kommunikatinsnebenstellenanlage KA wird durch einen zentralen Rechner gesteuert. Dieser steuert ein Koppelfeld KF und stellt Verbindungen zwischen internen Teilnehmerstellen T1, T2, T3, T4 und T5 bzw. zwischen einer internen und einer externen Teilnehmerstelle her. Erste Teilnehmerstellen T1 bestehen aus einem ersten Fernsprechendgerät T1F, einem ersten Datenendgerät T1D, einem (peripheren) Modem PM sowie aus einer Umschalteinrichtung U. Die Umschalteinrichtung U ist manuell in der Weise betätigbar, daß entweder das erste Fernsprechendgerät T1F oder die in der Figur 1 dargestellte Reihenschaltungsanordnung, bestehend aus dem ersten Datenendgerät T1D und dem Modem PM, an eine analoge Teilnehmeranschlußschaltung SLMA der Kommunikationsnebenstellenanlage KA ankoppelbar ist. Die Umschalteeinrichtung U und die analoge Teilnehmeranschlußschaltung SLMA sind über eine a/b-Ader miteinander verbunden. Die Schnittstelle zwischen dem ersten Datenendgerät T1D und dem Modem M1 ist vorzugsweise eine Schnittstelle RS 232 C. Gleiche Schnittstellen RS 232 C weisen auch die anderen Teilnehmerstellen T2 und T3 sowie die zentrale Anordnung MODPL auf.

Zweite Teilnehmerstellen T2 sind über zwei Teilnehmeranschlußschaltungen mit dem zentralen Rechner ZR der Nebenstellenanlage KA verbunden. Ein zweites analoges oder digitales Fernsprechendgerät T2FA, T2FD ist mit einer analogen oder digitalen Teilnehmeranschlußschaltung SLMA, SLMD verbunden, während ein zweites Datenendgerät T2D und eine vorgeschaltete Datenfernschalteinrichtung DCE2 mit einer digitalen Teilnehmeranschlußschaltung SLMD verbunden ist. Das zweite Fernsprechendgerät dient der Einleitung eines Datenverbindungsaufbaus zu einer ersten Teilnehmerstelle T1, zu einem externen Datenendgerät oder zu T4D oder T5D.

Dritte Teilnehmerstellen T3 bestehen aus einer Reihenschaltung eines dritten Datenendgerätes T3D und einer Datenfernschalteinrichtung DCE3, die an eine digitale Teilnehmeranschlußschaltung SLMD der Kommunikationsnebenstellenanlage KA angekoppelt ist.

Vierte Teilnehmerstellen T4 bestehen aus einer Reihenschaltung eines vierten Datenendgerätes T4D und einer Datenfernschalteinrichtung DCE4, die an eine ISDN-Teilnehmeranschlußschaltung SLMU1 der Kommunikationsnebenstellenanlage KA angekopppelt ist. Eine Teilnehmerstelle T4 realisiert einen sogenannten a/b-Dienst gemäß ISDN-Protokoll 1 TR 6 (Fax Gruppe 2, Fax Gruppe 3, Daten über Modern, Btx über Modem.

Fünfte Teilnehmerstellen T5 bestehen aus einer Reihenschaltung eines fünften Datenendgerätes T5D und einer Datenfernschalteinrichtung DCE5, die an eine ISDN-Teilnehmeranschlußschaltung SLMU2 angekoppelt ist. Eine Teilnehmerstelle TS realisiert einen Datenübertragungsdienst gemäß ISDN-Protokoll 1 TR 6 (Datenübertragung mit 64 kbit/s).

Die Anlage KA weist weitere analoge und digitale Teilnehmeranschlußschaltungen SLMA, SLMD sowie beispielsweise analoge Leitungssatzbaugruppen TMA (Trunk Module Analog) und digitale Leitungssatzbaugruppen TMD (Trunk Module Digital) auf. Zwischen die Teilnehmeranschlußschaltungen sind zentrale Modems MODPL angekoppelt. Die Baugruppen TMA,TMD sind mit Amtsleitungen AL1 und AL2 verbunden. Die Baugruppen TMD stellen jeweils einen ISDN-Basisanschluß für ISDN-Amtsverkehr und gegebenenfalls für ISDN-Amtsverkehr (zwei Kanäle zu 64 kbit/s) dar.

Die zentralen Anordnungen MODPL (Modempools) bestehen aus je einem zentralen Modem ZM und einer Datenfernschalteinrichtung ZDCE, wobei die Datenfernschalteinrichtung ZDCE an eine digitale

Teilnehmeranschlußschaltung SLMD angeschlossen ist. Modem ZM und Datenfernschalteinrichtung ZDEC der zentralen Anordnungen MODPL sind über jeweils eine Schnittstelle RS 232 C miteinander verbunden und im aktivierten Zustand wie noch beschrieben wird in Reihe geschaltet, wobei das Modem ZM dann an eine analoge Teilnehmeranschlußleitung SLMA angekoppelt ist. Von dieser analogen Teilnehmeranschlußschaltung SLMA führt eine a/b-Ader an die Datenfernschalteinrichtung ZDCE, die ein Steuerwerk ST, eine Ruftonempfangseinrichtung REC und eine Ruftonsendeeinrichtung TR aufweist. Die Ruftonempfangseinrichtung REC empfängt Ruftöne (called party tones), die von dem analogen Modem PM der Teilnehmerstelle T1 oder über die Amtsleitung AL im Zuge eines Datenverbindungsaufbaus unter Einbeziehung der Anordnungen MODPL an die Kommunikationsnebenstellenanlage KA übermittelt werden und veranlaßt das Steuerwerk ST beim Erkennen von Ruftönen, das Modem ZM an die analoge Teilnehmeranschlußschaltung SLMA durchzuschalten. Im durchgeschalteten Zustand ergibt sich die angesprochene Reihenschaltung von Modem ZM und Datenfernschalteinrichtung ZDCE in der zentralen Anordnung MODPL. Bei einem von einer zweiten oder dritten Teilnehmerstelle T2, T3 und/oder einer entsprechend strukturierten externen Teilnehmerstelle eingeleiteten Datenverbindungsaufbau zu einer ersten Teilnehmerstelle T1 überwacht die Rufton empfangseinrichtung REC die von dem peripheren Modem PM der ersten Teilnehmerstelle T1 abgegebenen Quittungstöne und erkennt dabei Frei- bzw. Besetzttöne der gerufenen externen Teilnehmerstelle T1. Das gleiche gilt für eine Datenverbindung von T2 oder T3 zu einer externen Teilnehmerstelle mit einem analogen Modem.

Die Ruftonsendeeinrichtung TR sendet besondere Ruftöne (Calling party tones) an das erste Fernsprechendgerät T1F der ersten Teilnehmerstelle T1 in Zuge von Datenverbindungen, die entweder von dieser ersten Teilnehmerstelle T1 zu einer zweiten oder dritten Teilnehmerstelle T2, T3 oder in umgekehrter Richtung aufgebaut werden. Die besonderen Ruftöne zeigen in der ersten Teilnehmerstelle T1 an, daß die Umschalteeinrichtung U in der Weise zu betätigen ist, daß das erste Fernsprechendgerät T1F von der der ersten Teilnehmerstelle T1 zugeordneten analogen Teilnehmeranschlußschaltung SLMA abgekoppelt und die Anordnung aus erstem Datenendgerät T1D und peripherem Modem PM an diese analoge Teilnehmeranschlußschaltung SLMA angekoppelt wird (Einkoppelung von MODPL).

Alle Teilnehmeranschlußschaltungen SLMA, SLMD, SLMU1 und SLMU2 sind über das Koppelfeld KF mit dem zentralen Rechner ZR ver- bunden. Mit diesem steht auch eine Datenbasis DB in Verbindung, in der vorzugsweise erste Speicherbereiche CRS für die Aufnahme von verbindungsrelevanten Daten für die Dauer der Verbindung, davon getrennte zweite Speicherbereiche VDS zur Aufnahme jeweils nur während eines Meldungsaustausches relevanter - flüchtiger - Daten und dritte Speicherbereiche SPP für die Aufnahme von Anlagenkonfigurationsdaten einschließlich die Konfiguration von Teilnehmerstellen T1, T2, T3, T4, T5 und von zentralen Anordnungen MODPL beschreibenden Daten vorgesehen sind.

Jede zentrale Anordnung MODPL kann mehrere identische Modems ZM und Einrichtungen ZDCE umfassen, um gleichzeitig mehrere Datenverbindungen zwischen den Teilnehmerstellen T1, T2, T3, T4 und T5 zu ermöglichen. Daneben kann die Kommunikationsnebenstellenanlage KA mehrere physikalisch unterschiedliche zentrale Anordnungen MODPL aufweisen, insbesondere dann, wenn die zu verbindenden Datenendgeräte T1D, T2D, T3D, T4D, T5D sowie externe Datenendgeräte mit unterschiedlichen Datenübertragungsraten arbeiten. Jede Anordnung MODPL enthält dann ein, beziehungsweise mehrere gleiche modempoolspezifische zentrale Modems ZM und zugehörige Einrichtungen ZDCE.

Die an einer bestimmten Datenverbindung beteiligten analogen Modems PM und ZM weisen die gleichen Übertragungseigenschaften auf und verhalten sich damit an der jeweiligen analogen Schnittstelle zu SLMA gleich. Als Modems PM und ZM sind auf dem Markt erhältliche Zweidraht-Modems wie beispielsweise die Modems der amerikanischen Firma Bell mit den Produktbezeichnungen 103 und 2025 oder ganz allgemein Modems verwendbar, die den CCITT-Empfehlungen V.21, V.22, V.22 bis, V.23, V.26 bis und V.27 ter entsprechen.

Die an einer bestimmten Datenverbindung beteiligten Datenfernschalteinrichtungen DCE2, DCE3, DCE4, DCE5 und ZDCE weisen die gleichen Übertragungseigenschaften auf und verhalten sich damit an der jeweiligen digitalen Schnittstelle zu SLMD bzw. SLMU1,SLMU2 gleich. DCE2, DCE3 und ZDCE entsprechen den CCITT-Empfehlungen X.15. DCE2 und DCE3 haben die Funktion von Datenübertragungseinrichtungen (data circuit equipment), während ZDCE die Funktion einer Datenendeinrichtung (data terminal equipment) hat. Die Einrichtungen DCE2 und DCE3 entsprechen je einem bekannten "Terminal Adapter", das eine Datenschnittstelle RS 232 C an eine ISDN-Schnittstelle (So) anpaßt. Die Einrichtung DCE4 ist ein ISDN-Adapter a/b und die Einrichtung DCE5 kann eine ISDN-V24-Schnittstelle (Produkt der Fa. Siemens: "DCI 631, S30122-U5075-X") bilden.

Die Einrichtung ZDCE ist schaltungstechnisch wie die Einrichtung DCE2 und DCE3 ausgebildet, weist jedoch als zusätzliche Komponenten noch das Steuerwerk ST, die Ruftoneimpfangseinrichtung REC und die Ruftonsendeeinrichtung TR auf.

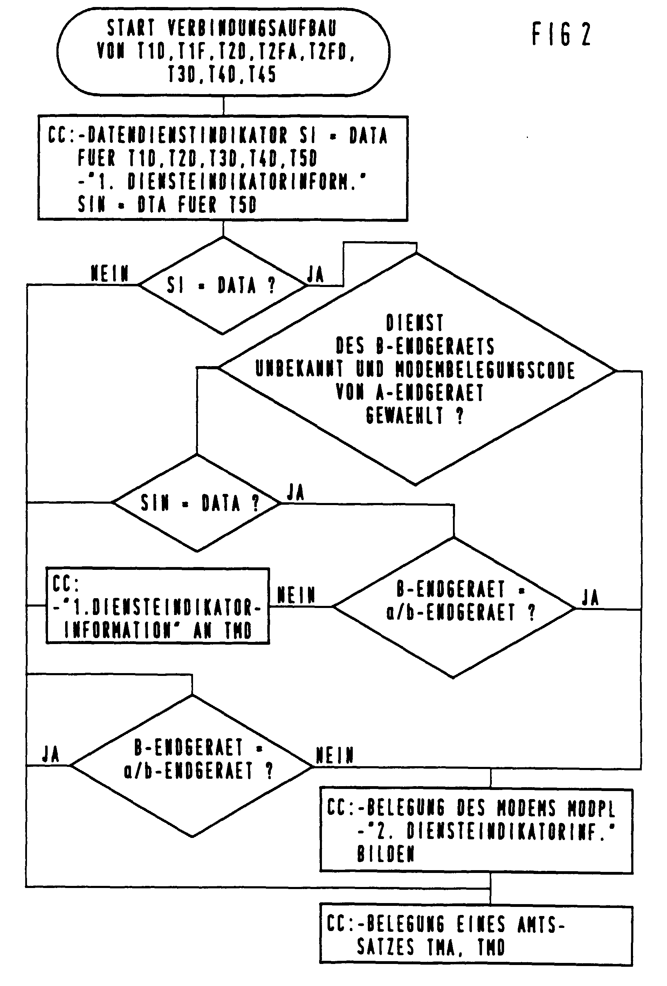

Wie in Figur 2 in Form eines Ablaufdiagramms dargestellt, beginnen nach der Einleitung eines Verbindungsaufbaus durch eines der internen Endgeräte die Prozeduren im Zusammenhang mit der Modem- und Amtssatzbelegung mit einer Prüfung, ob die herzustellende Verbindung eine Datenverbindung darstellt. Datenverbindungen werden bei der in Fig. 1 dargestellten Kommunikationsnebenstellenanlage von T1D, T2D, T3D, T4D und T5D hergestellt. Für einen von einem internen Datenendgerät T1D, T2D, T3D, T4D, T5D initiierten Verbindungsaufbau wird ein Datendiensteindikator SI=DATA und für ein ISDN-Endgerät T5D initiierten Verbindungsaufbau zusätzlich eine Diensteindikatorinformation SIN=DTA ("1. Diensteindikatorinformation") gebildet. Ist keine Datenverbindung herzustellen, wird unmittelbar ein Amtssatz TMA oder TMD belegt, je nachdem, ob das den Verbindungsaufbau einleitende Endgerät T1F,T2FA; T2FD ein analoges oder ein digitales Endgerät ist.

Ist dagegen eine Datenverbindung herzustellen (SI=DATA), wird weiterhin anhand der Wählinformationen geprüft, ob der Dienst (a/b-Dienst oder Datendienst) des B-Endgeräts unbekannt ist und ob ein Modembelegungscode von der internen Teilnehmerendstelle gewählt worden ist, die den Verbindungsaufbau initiiert.

Ist dies der Fall, so wird das gewählte Modem belegt, soweit ein solches verfügbar ist.

Soweit die letztgenannte Prüfung zu einem negativen Ergebnis führt, wird weiterhin geprüft, ob das die Verbindung aufbauende (A-) Endgerät ein Datenendgerät ist, für das die erste Diensteindikatorinformation SIN=DTA gebildet worden ist. Bejahendenfalls wird weiterhin geprüft, ob das Endgerät, zu dem die Verbindung aufzubauen ist, ein a/b-Endgerät ist. Bejahendenfalls wird ein Modem MODPL belegt; andernfalls wird ein Amtssatz TMD belegt und die bereits gebildete 1. Diensteindikatiorinformation dem Amtssatz zugeführt.

Sofern die vorletzte Prüfung ("Ist A-Endgerät eine Datenendgerät mit SIN=DTA?") zu einem negativen Ergebnis führt, wird geprüft, ob das B-Endgerät ein a/b-Endgerät ist. Sofern diese Prüfung zu einem negativen Ergebnis führt, wird zunächst ein zentrales Modem MODPL belegt und im Anschluß daran ein Amtssatz; führt diese Prüfung jedoch zu einem positiven Ergebnis, so wird unmittelbar ein Amtssatz TMA oder TMD belegt.

Wird ein Modem MODPL belegt, bildet die Steuerung CC eine zweite Diensteindikationsinformation, die den von dem zwischengeschalteten zentralen Modem verbindungszielseitig realisierten Dienst (a/b oder Datenübertragung 64 kbit/s) bezeichnet. Die erste und die zweite Diensteindikatorinformation entspricht dem Service Indicator gemäß ISDN-Protokoll 1 TR 6 (vgl. 1 TR 6, Tabelle 3-84: Codierung des Service Indicators).

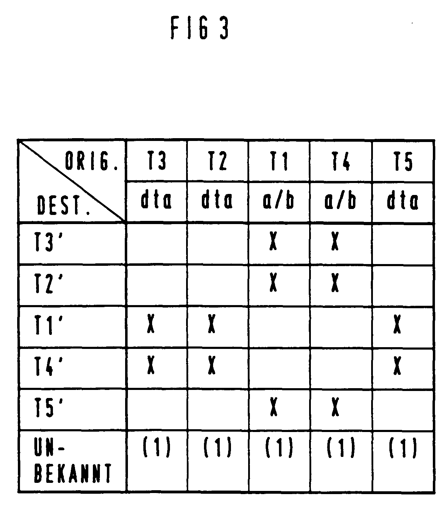

Tabelle 3 zeigt eine Tabelle, die in Abhängigkeit von internen A-Endgeräten ("Orig.") T1 ... T5 und internen B-Endgeräten ("Dest"). T1 ... T5 bzw. externen B-Endgeräten T1' ... T5' gleicher Struktur angibt, in welchen Fällen ein zentrales Modem zwischengeschaltet wird ("X"). Ist der Kommunikationsnebenstellenanlage die Struktur, das heißt der Dienst eines externen B-Endgeräts unbekannt ("(1)" in Fig. 3), wird ein Modem belegt, wenn von dem A-Endgerät ein Modembelegungscode gewählt worden ist.

## Patentansprüche

1. Verfahren zur Herstellung von Datenverbindungen in einer Kommunikationsnebenstellenanlage (KA), bei der in Abhängigkeit von an einem jeweiligen Verbindungsaufbau beteiligten Endgeräten (T1,...,T5) ein zentrales Modem (MODPL) zwischen die am Verbindungsaufbau beteiligten Endgeräte zwischengeschaltet wird, dadurch **gekennzeichnet,** daß bei einem Verbindungsaufbau ausgehend von einem als ISDN-Endgerät zur Realisierung eines A/B-Dienstes (Faxgruppe 2, Faxgruppe 3, Daten über Modem, Btx über Modem) bzw. eines Datenübertragungsdienstes (64 kbit/s) ausgebildeten Endgerätes von diesem eine den jeweiligen Dienst bezeichnende erste ISDN-protokollkonforme Diensteindikatorinformation (SIN) gebildet wird, daß bei Zwischenschaltung eines zentralen Modems (MODPL) und bei Anschaltung einer digitalen Leitungssatzbaugruppe (TMD) eine zweite Diensteindikatorinformation zur Bezeichnung des von dem zwischengeschalteten zentralen Modem (MODPL) verbindungszielseitig realisierten Dienstes gebildet wird und daß die zweite Diensteindikatorinformation (SIN) oder bei Nichtzwischenschaltung des zentralen Modems (MODPL) die erste Diensteindikatorinformation (SIN), sofern diese den Datenübertragungsdienst bezeichnet, der digitalen Leitungssatzbaugruppe (TMD) zur ISDN-Signalisierung zugeführt wird.

2. Verfahren nach Anspruch 1, dadurch **gekennzeichnet,** daß die Zwischenschaltung des zentralen Modems (MODPL) von einem ISDN-Endgerät durch Wählinformation aktiviert wird.

## Claims

1. Method for producing data connections in an auxiliary-exchange communications installation (KA), in which a central modem (MODPL) is inserted between the terminals involved in the setting up of the connection in dependence on terminals (T1, ..., T5) involved in a respective connection setup, characterized in that during the setting up of a connection originating from a terminal constructed as ISDN terminal implementing an A/B service (fax group 2, fax group 3, data via modem, vtx via modem) or of a data transmission service (64 kbit/s), this terminal forms a first service indicator information (SIN) in conformity with the relevant ISDN protocol, which designates the respective service, in that when a central modem (MODPL) is inserted and when a digital trunk module (TMD) is connected, a second service indicator information is formed for designating the service implemented on the destination side by the inserted central modem (MODPL), and in that the second service indicator information (SIN) or, when the central modem (MODPL) is not inserted, the first service indicator information (SIN), if it designates the data transmission service, is supplied to the digital trunk module (TMD) for ISDN signalling.

2. Method according to Claim 1, characterized in that the insertion of the central modem (MODPL) is activated by an ISDN terminal by means of dialling information.

## Revendications

1. Procédé d'établissement de communications de données dans un central privé (KA) de communication, dans lequel on interconnecte en fonction de terminaux (T1 à T5) participant à l'établissement d'une communication un modem central (MODPL) entre les terminaux participant à l'établissement d'une communication, caractérisé en ce que l'on forme lors de l'établissement d'une communication en partant d'un terminal ayant la forme d'un terminal RNIS pour la mise en oeuvre d'un service A/B (groupe de fax 2, groupe de fax 3, données par modem, vidéotex interactif par modem) ou d'un service de transmission de données (64 kbit/s), par celui-ci, une première information (SIN) d'indicateur de services désignant le service considéré et conforme au protocole RNIS, on forme, lors d'une interconnexion d'un modem central (MODPL) et lors de la connexion d'un module numérique (TMD) de joncteur une seconde information d'indicateur de services pour désigner le service mis en oeuvre du côté destinataire de la communication par le modem (MODPL) central interconnecté et on envoie au module numérique (TMD) de joncteur, pour la signalisation RNIS, la seconde information d'indicateur de services ou en cas de non interconnexion du modem central (MODPL) la première information (SIN) d'indicateur de services, dans la mesure où celle-ci désigne le service de transmission de données.

2. Procédé suivant la revendication 1, caractérisé en ce que l'on active l'interconnexion du modem central (MODPL) par un terminal RNIS par une information de sélection.
